(19) Europäisches Patentamt
European Patent Office
Office européen des brevets

(11) **EP 4 770 268 A1**

(12) **EUROPEAN PATENT APPLICATION**

(43) Date of publication:
**01.07.2026 Bulletin 2026/27**

(21) Application number: **24223573.7**

(22) Date of filing: **28.12.2024**

(51) International Patent Classification (IPC):
**H05B 3/06** (2006.01)    **H05B 3/26** (2006.01)
**H05B 3/28** (2006.01)

(52) Cooperative Patent Classification (CPC):
**H05B 3/06; H05B 3/26; H05B 3/28; H05B 3/283**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Design & Technical Solutions LLC
Wantagh, NY 11793 (US)**

(72) Inventor: **JANG, Sunghoon
Glen Rock, NJ 07452 (US)**

(74) Representative: **Lorente Berges, Ana
A2 Estudio Legal
C/ Maria de Molina n° 41
28006 Madrid (ES)**

(54) **MULTI-LAYERED ELECTRIC HEATING TILE**

(57)    The present disclosure relates to an electric heat tile including: a first layer including at least one temperature sensor and a power line electrically connected to the temperature sensor; a second layer placed on an upper surface of the first layer and including an electric heating wire electrically connected to the power line; an upper cover covering an upper surface of the second layer; and a lower cover covering a lower surface of the first layer, wherein the lower cover has, on one side, at least one fastening member electrically connected to the power line formed on the first layer.

FIG. 1

100

Processed by Luminess, 75001 PARIS (FR)

**Description**

## TECHNICAL FIELD

The present disclosure relates to an electric heating tile including an electric heating wire, and, more particularly, to an electric heating tile in the shape of a block in which a temperature sensor and an electric heating wire are placed for a user to monitor the temperature of the tile and control the heating temperature by the electric heating wire.

## BACKGROUND

In general, plate-shaped interior materials made of tiles, wood, metal synthetic resin, FRP, etc. are attached to interior walls of buildings to decorate a specific space.

Most of such interior materials in buildings have the problem of being heavy and are used only as interior materials that are designed to have a nice appearance but are not given any functionality.

Meanwhile, indoor heating in buildings is divided into two types: forced air heating, which warms cold air using an electric heater or by burning fuel such as natural gas etc. and blows it into a room; and radiant heating, which heats a floor or a wall and warms a room by radiation from the floor or the wall.

In particular, radiant heating is mainly used because it has better heating efficiency. Heating by such radiant heating is divided into heating by directing hot water through pipes under a floor or behind a wall to heat the floor or the wall, heating by embedding an electric heating wire in a floor or a wall to heat the floor or the wall, etc.

Here, in the case of radiant heating using hot water, water may leak as pipes rot or break, so heating using hot water has been gradually replaced by heating using electric heating wires.

However, traditional radiant heating systems involve complicated procedures such as laying electric heating wires, pouring cement, and covering the floor or walls with decorative tiles, resulting in high labor and construction costs. Some radiant heating systems (especially those using electric heating wires) generate harmful electromagnetic waves, which can pose health risks. Additionally, the risk of fire from electric leakage or damage from external impacts remains a concern. Many current heating systems suffer from poor efficiency, especially when using water-based systems that can lead to issues like broken or rotting pipes due to leakage.

To solve such problems, floor heating using planar heating elements or linear heating elements that generate less electromagnetic waves and can easily transfer heat, has been used.

In particular, for the construction of floor heating using planar heating elements, insulation material is laid on a floor to be heated, and planar heating elements are applied thereon.

However, the planar heating elements are weak in strength so as to be easily damaged by external impact, and are weak against moisture so as to cause a fire due to short circuit. In addition, when some of the planar heating elements are damaged, repair is difficult.

The present disclosure addresses key challenges in the field of radiant heating systems for buildings, specifically focusing on reducing the complexity, labor, and cost associated with installation while improving safety and efficiency. The current technologies used in radiant heating (particularly those utilizing electric heating wires) often suffer from a series of issues, including high labor costs, construction complexity, and potential risks from electromagnetic radiation. The disclosure presented aims to provide a more efficient, safer, and cost-effective alternative.

The proposed disclosure seeks to solve these issues by introducing an electric heating tile that incorporates the following features. The heating module is integrated directly into a ceramic tile, removing the need for complex and labor-intensive installation processes. The tile includes a fastening member on one side, allowing it to be easily coupled with adjacent tiles. This design drastically reduces the time and labor required for installation, making the system far more accessible and less costly than traditional methods

Meanwhile, US Patent Application Publication No. US 2004/0109681 discloses a modular electric heating tile including a tile body and an electric heating unit. The tile body is made of a material selected from a group consisting of clay and cement, and has two opposite first and second surfaces. The electric heating unit is mounted on the tile body adjacent to the first surface in an enveloped manner.

However, in the case of the conventional technology, since a heating wire and a heat-conducting tile body are used as the heating medium, it is difficult to secure a sufficient connection area between the two, which may cause poor heat transfer, possibility of short circuit in the heating wire, etc. and reduces not only functionality but also safety.

In addition, in order to insert a heating wire into a square block base, a heating wire fitting groove and cavity has to be machined on the surface of the square block base before the heating wire is installed, which is disadvantageous in terms of manufacturing ability.

Therefore, in order to solve the above-mentioned problems, there is a need for research on heating tiles that are easy to construct and repair and can be used safely from accidents such as fire.

## SUMMARY

The present disclosure is aimed at providing an electric heating tile that is in the form of a ceramic module with a built-in electric heating wire and includes a fastening member on one side so as to be installed in a simple manner by being easily coupled to each other.

In addition, the present disclosure is aimed at providing an electric heating tile that includes a control module connected thereto to collect temperature data from a temperature sensor placed therein and control the heating by an electric heating wire based on the temperature data in a safe and easy manner.

The problems to be resolved by the present disclosure are not limited to the problems mentioned above, and the following description will allow a person having ordinary skill in the technical field to which the present disclosure pertains to clearly understand other problems to be solved by the present disclosure that are not mentioned herein.

An electric heating tile according to an embodiment of the present disclosure may include a first layer including at least one temperature sensor and a power line electrically connected to the temperature sensor; a second layer placed on an upper surface of the first layer and including an electric heating wire electrically connected to the power line; an upper cover covering an upper surface of the second layer; and a lower cover covering a lower surface of the first layer, and the lower cover may have, on one side, at least one fastening member electrically connected to the power line formed on the first layer.

The electric heating tile may further include a control module that controls the heating by the electric heating wire, and the control module may include a power supply unit that supplies power to the temperature sensor and the power line, a communication unit that receives a user's control signal from a predetermined user terminal, and a heating wire control unit that controls the heating by the electric heating wire based on the user's control signal received from the communication unit.

The lower cover may further include a cable having one end coupled with the fastening member and the other end connected to the control module.

The first layer may further include a communication tag, the control module may further include a tag recognition unit that recognizes the communication tag, and the tag recognition unit may include a code assigning unit that assigns a unique order to the communication tags when at least two communication tags are recognized and a temperature collection unit that collects the temperature data from the temperature sensor based on the unique order.

The second layer may include a first terminal provided at one end of the electric heating wire at a position corresponding to the position of a positive terminal provided on the first layer; and a second terminal provided at the other end of the electric heating wire at a position corresponding to the position of a negative terminal provided on the first layer, the first terminal and the second terminal may be respectively connected to the positive terminal and the negative terminal by soldering, and conductive paste may be applied to the soldered area.

The present disclosure may provide an electric heating tile that is in the form of a ceramic module with a built-in electric heating wire and includes a fastening member on one side so as to be installed in a simple manner by being easily coupled to each other.

In addition, the present disclosure may provide an electric heating tile that includes a control module connected thereto to collect temperature data from a temperature sensor placed therein and control the heating by an electric heating wire based on the temperature data in a safe and easy manner.

## BRIEF DESCRIPTION OF THE DRAWINGS

FIG. 1 is a view of an electric heating tile according to an embodiment of the present disclosure.

FIG. 2 is a view for illustrating a first layer of the electric heating tile according to an embodiment of the present disclosure.

FIG. 3 is a view for illustrating a second layer of the electric heating tile according to an embodiment of the present disclosure.

FIGS. 4 to 6 are views for illustrating a lower cover of the electric heating tile according to an embodiment of the present disclosure.

FIG. 7 is a view for illustrating a control module of the electric heating tile according to an embodiment of the present disclosure.

FIG. 8 is a view for illustrating how the first and second layers of the electric heating tile according to an embodiment of the present disclosure are combined.

## DETAILED DESCRIPTION

Specific details, including the problems to be solved by the present disclosure, the means for solving the problems, and the effects of the present disclosure, as described above, are included in the embodiments and the drawings described below. The advantages and the features of the present disclosure and the methods of achieving them will become clear by referring to the embodiments described in detail below along with the accompanying drawings.

The scope of the present disclosure is not limited to the embodiments described below, and various modifications may be made by a person having ordinary skill in the art within the technical gist of the present disclosure.

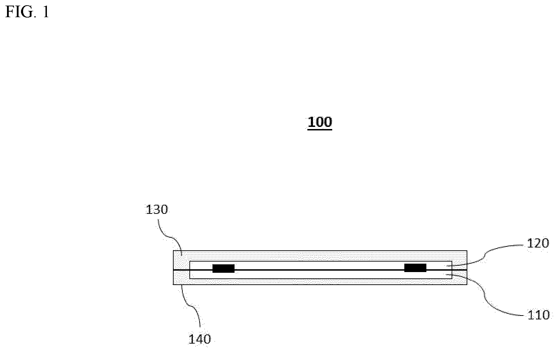

Hereinafter, the present disclosure having the title of the invention will be described in detail with reference to the attached FIG. 1.

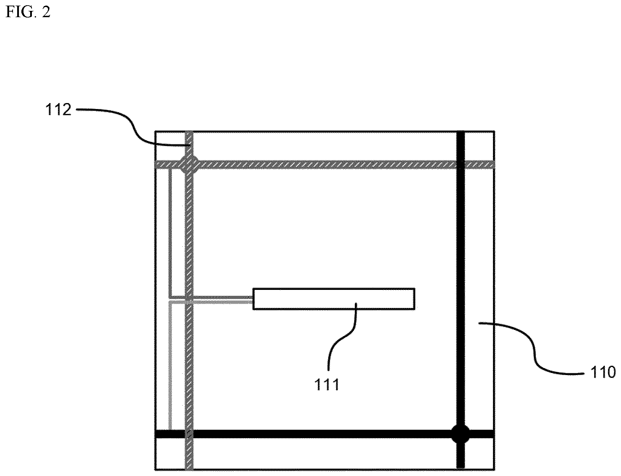

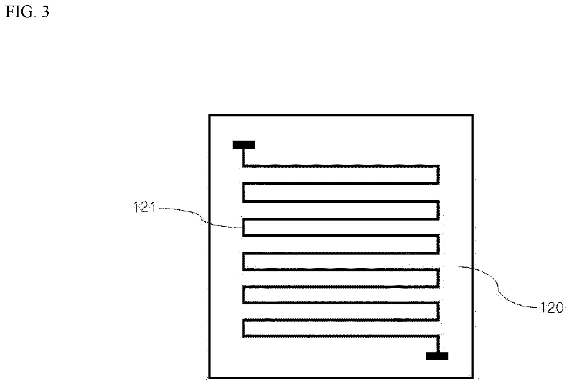

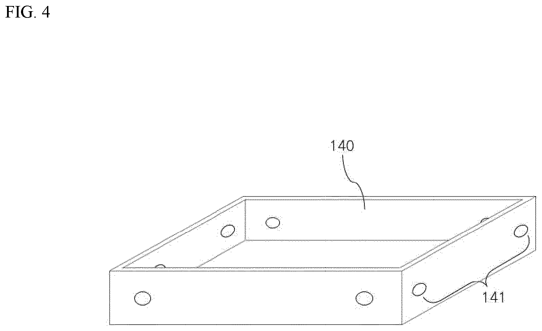

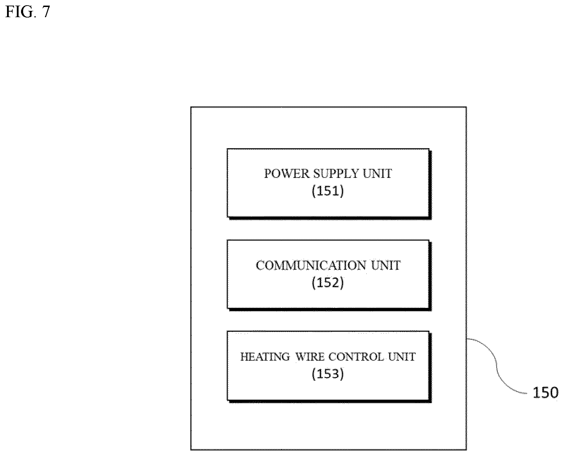

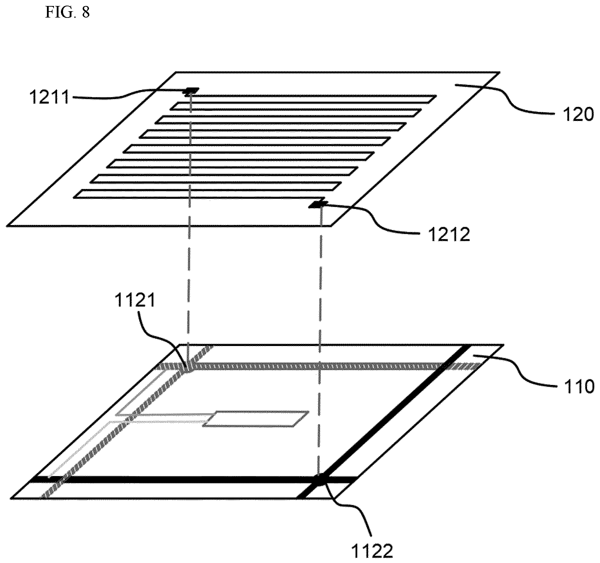

FIG. 1 is a view of an electric heating tile according to an embodiment of the present disclosure, FIG. 2 is a view for illustrating a first layer of the electric heating tile according to an embodiment of the present disclosure, FIG. 3 is a view for illustrating a second layer of the electric heating tile according to an embodiment of the present disclosure, FIGS. 4 to 6 are views for illustrating a lower cover of the electric heating tile according to an embodiment of the present disclosure, FIG. 7 is a view for illustrating a control module of the electric heating tile according to an embodiment of the present disclosure, and FIG. 8 is a view for illustrating how the first and second layers of the electric heating tile according to an embodiment of the present disclosure are combined.

<Embodiment 1>

Referring to FIGS. 1 to 3, an electric heating tile 100 according to an embodiment of the present disclosure may include at least one temperature sensor 111, a first layer 110 on which a power line 112 electrically connected to the temperature sensor 111 is formed, a second layer 120 placed on an upper surface of the first layer 110 and including an electric heating wire 121 electrically connected to the power line 112, an upper cover 130 covering an upper surface of the second layer 120, and a lower cover 140 covering a lower surface of the first layer 110.

For example, the upper cover 130 may be made of various materials such as ceramic, wood, and synthetic resin, and the lower cover may be made of synthetic resin such as PVC.

For example, the thickness of the air gap formed between the first layer 110 and the upper cover 130 may be less than a preset maximum thickness (e.g., 10 mm).

Meanwhile, referring to FIG. 4, the lower cover 140 may have, on one side, at least one fastening member 141 electrically connected to the power line 112 formed on the first layer 110.

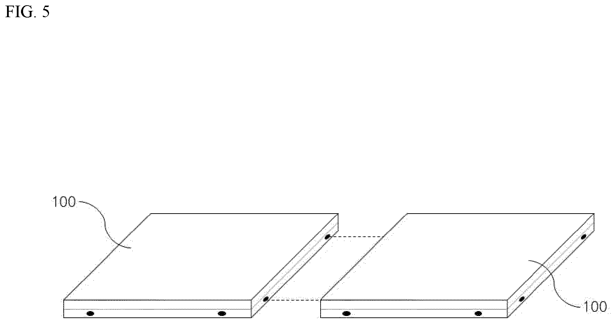

As shown in FIG. 5, the electric heating tile 100 may be coupled to each other by the fastening member 141. That is, because the electric heating tile 100 may be formed in the form of a module to be assembled, it may be possible to place the electric heating tile 100 not only in the entire area but also in partial areas requiring construction.

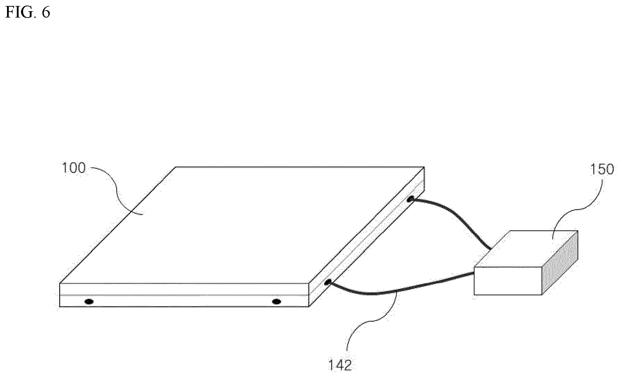

Meanwhile, referring to FIGS. 6 and 7, the electric heating tile 100 may further include a control module 150 that controls the heating by the electric heating wire.

The lower cover 140 may include a cable 142 having one end coupled with the fastening member 141 and the other end connected to the control module 150.

For example, a groove into which the cable 142 is inserted may be formed in the area of the lower cover 140 where the fastening member 141 is placed.

Accordingly, after the electric heating tiles 100 are coupled to each other, it may be possible to pull the cable 142 out of any one of the electric heating tiles 100 and connect it to the control module 150.

Meanwhile, the control module 150 may include a power supply unit 151 that supplies power to the temperature sensor 111 and the power line 112, a communication unit 152 that receives a user's control signal from a predetermined user terminal, and a heating wire control unit 153 that controls the heating by the electric heating wire 121 based on the user's control signal received from the communication unit 152.

For example, the user's control signal may include information about a heating reservation time, the highest heating temperature, the lowest heating temperature, etc.

Therefore, the heating wire control unit 153 may control the heating by the electric heating wire 121 by adjusting the level of the voltage applied to the electric heating wire 121, a duty rate, etc. based on the user's control signal.

Meanwhile, the first layer 110 may further include a communication tag (not shown), and the control module 150 may further include a tag recognition unit (not shown) that recognizes the communication tag.

More specifically, the tag recognition unit may include a code assigning unit that assigns a unique order to the communication tags when at least two communication tags are recognized and a temperature collection unit that collects temperature data from the temperature sensor based on the unique order.

Therefore, when the plurality of electric heating tiles 100 are combined, each of the plurality of electric heating tiles 100 may be recognized by the tag recognition unit, and a unique order may be assigned to a communication tag included in the electric heating tile 100, so that it may be possible to monitor the temperature of each of the plurality of electric heating tiles 100.

For example, when four electric heating tiles 100 are arranged, the control module 150 may recognize each of the electric heating tiles 100 through communication tags included in the electric heating tiles 100. In this case, it may be possible to monitor the heating by each of the electric heating tiles 100.

Therefore, it may be possible to monitor whether an error has occurred in the temperature sensor 111 and the electric heating wire 121 included in each of the electric heating tiles 100, and it may be possible for the electric heating tile 100 in which an error has occurred to be quickly replaced.

Meanwhile, as shown in FIG. 8, the second layer 120 may include a first terminal 1211 provided at one end of the electric heating wire 121 at a position corresponding to the position of a positive terminal 1121 provided on the first layer 110 and a second terminal 1212 provided at the other end of the electric heating wire 121 at a position corresponding to the position of a negative terminal 1122 provided on the first layer 110.

In that case, in order to electrically connect the first layer 110 and the second layer 120, the first terminal 1211 and the second terminal 1212 may be respectively connected to the positive terminal 1121 and the negative terminal 1122 by soldering, and conductive paste may be applied to the soldered area.

For another example, a thermally conductive sheet may be attached to the side of the upper cover 130, so that, when the plurality of electric heating tiles 100 are combined with each other, heat may be quickly conducted between the electric heating tiles 100.

<Embodiment 2>

Meanwhile, in order to determine whether noise is generated due to foreign substances, etc. attached to the temperature sensor 111, the control module 150 may further include a sensor error monitoring unit (not shown) that receives collected data from the temperature sensor and analyzes them.

In other words, when foreign substances are attached to the surface of the temperature sensor, the values measured by the sensor will show irregular patterns. In this regard, it may be possible to not only determine whether foreign substances are attached to the surface of the sensor but also determine whether an error has occurred in the operation of the sensor, taking such characteristics into account.

To this end, the sensor error monitoring unit (not shown) may calculate the average and the standard deviation of multiple values measured by the sensor for a preset period of time. When the number of values outside the standard deviation from the average of the multiple values (hereinafter, referred to as "noise data") is equal to or more than a preset number (e.g., five), the sensor error monitoring unit (not shown) may assume that there are foreign substances attached to the surface of the sensor.

At the same time, the sensor, error monitoring unit (not shown) may calculate the intervals between the times at which each of the noise data has been measured, and may determine that there is a foreign substance attached to the surface of the sensor when the intervals are not constant.

Here, when the maximum difference value ($M_d$) of the time intervals between the noise data calculated according to Equation 1 below is equal to or greater than a value calculated by multiplying the average of the time intervals between the noise data ($T_{avg}$) calculated according to Equation 2 below by a constant (e.g., two), it cannot be determined that the time interval is constant.

[ Equation 1]

$$M_d = N_{max} - N_{min}$$

wherein $M_d$ is the maximum difference value of time intervals between noise data, $N_{max}$ is the maximum value of the time intervals between the noise data, and $N_{min}$ is the minimum value of the time intervals between the noise data.

[ Equation 2]

$$T_{avg} = \frac{\sum_{i=1}^{n} T_{(i-1) \, to \, i}}{n}$$

Wherein $T_{avg}$ is the average value of time intervals between noise data, $T_{(i-1) \, to \, i}$ is the time interval between the *i-1*th noise data and the ith noise data, $T_{0\,to\,1}$ is the time interval between the time point when the sensor started operating and the time point when the first noise data appeared, and *n* is the number of noise data.

For example, as shown in Table 1 below, when the data of $T_0$ to $T_{20}$ is 9, 10, 11, 12, 14, 18, 9, 9, 6, 13, 2, 8, 9, 9, 10, 17, 9, 10, 3, and 12, the average is 10, and the standard deviation is 3.88. Therefore, there are six note data: 14, 18, 6, 2, 17, and 3. Since the number of noises is greater than the preset value of 5, it can be assumed that there are foreign substances attached to the surface of the sensor.

<Table 1>

| t | 1 | 2 | 3 | 4 | 5 | 6 | 7 | 8 | 9 | 10 | 11 | 12 | 13 | 14 | 15 | 16 | 17 | 18 | 19 | 20 | average | Standard deviation |
|---|---|---|---|---|---|---|---|---|---|----|----|----|----|----|----|----|----|----|----|----|---------|--------------------|
| Value obtained by sensor | 9 | 10 | 11 | 12 | 14 | 18 | 9 | 9 | 6 | 13 | 2 | 8 | 9 | 9 | 10 | 17 | 9 | 10 | 3 | 12 | 10 | 3.88 |
| Whether there is a noise (N) | | | | | N | N | | | N | | N | | | | | N | | N | | | | |

The result of the calculation according to Equation 1 and Equation 2 to determine whether a noise appears irregularly is as follows: As shown in Table 2 below, the maximum difference ($M_d$) of the time intervals between the noise data is seven, which is eight minus one, and the average ($T_{avg}$) of the time intervals between the noise data is 3.5.

<Table 2>

| Noise data ($T_{(i-1)\,to\,i}$) | $T_{01}$ | $T_{12}$ | $T_{21}$ | $T_{34}$ | $T_{45}$ | $T_{56}$ | $T_{avg}$ |
|---|---|---|---|---|---|---|---|
| Time interval between noise data | 5 | 1 | 3 | 2 | 8 | 2 | 3.5 |

Therefore, since 7, which is the maximum difference value ($M_d$) of the time intervals between the noise data, falls within the values that are equal to or greater than twice 3.5, which is the average ($T_{avg}$) of the time intervals between the noise data, it can be confirmed that there are foreign substances attached to the surface of the sensor.

As described above, according to an embodiment of the present disclosure, it may be possible to monitor and sense errors caused by foreign substances attached to the surface of the sensor through the sensor error monitoring unit, so that it may be possible to more accurately determine whether the temperature sensor is operating normally.

The electric heating tile according to the present disclosure may be in the form of a ceramic module with a built-in electric heating wire and include a fastening member on one side, so as to be installed in a simple manner by being easily coupled to each other.

In addition, the electric heating tile according to the present disclosure may include the control module connected thereto so as to collect temperature data from the temperature sensor provided therein and control the heating by the electric heating wire based on the temperature data in a safe and simple manner.

In addition, a method of controlling the electric heating tile according to an embodiment of the present disclosure may be recorded on a computer-readable medium including program commands for performing various operations that can be carried out by a computer. The computer-readable medium may individually include program commands, data files, data structures, etc., or may include combinations thereof. The program commands of the medium may be specifically designed and constructed for the present disclosure, or may be available by being widely known to those having ordinary skill in the art of computer software. Examples of the computer-readable recording medium may include magnetic media such as hard disks, floppy disks, and magnetic tapes, optical media such as CD-ROMs and DVDs, magnetooptical media such as floptical disks, and hardware devices specifically designed to store and execute program commands, such as ROMs, RAMs, and flash memories. Examples of program commands may include not only machine language codes such as those created by a compiler, but also high-level language codes that can be executed by a computer using an interpreter, etc.

Although an embodiment of the present disclosure has been described with reference to the limited examples and drawings, it is not limited to the above-described examples. A person having ordinary skill in the field to which the present disclosure pertains would be able to make various modifications and variations to the examples described herein. Therefore, the embodiment of the present disclosure should be understood only by the claims set forth below, and all of equivalents or equivalent modifications thereof should be deemed to fall within the scope of the technology of the present disclosure.

**Claims**

1. An electric heating tile comprising:

a first layer including at least one temperature sensor and a power line electrically connected to the temperature sensor;

a second layer placed on an upper surface of the first layer and including an electric heating wire electrically connected to the power line;

an upper cover covering an upper surface of the second layer; and

a lower cover covering a lower surface of the first layer,

wherein the lower cover has, on one side, at least one fastening member electrically connected to the power line formed on the first layer.

Further comprising a control module that controls the heating by the electric heating wire, wherein the control module includes a power supply unit that supplies power to the temperature sensor and the power line, a communication unit that receives a user's control signal from a predetermined user terminal, and a heating wire control unit that controls the maximum and minimum heating temperature, electric power, and duty cycle by the electric heating wire based on the user's control signal received from the communication unit. 2. Wherein the lower cover further includes a cable having one end coupled with the fastening member and the other end connected to the control module.

2. The electric heating tile of claim 1, wherein the first layer further includes a communication tag, the control module further includes a tag recognition unit that recognizes the communication tag, and the tag recognition unit includes a code assigning unit that assigns a unique order to the communication tags when at least two communication tags are recognized and a temperature collection unit that collects the temperature data from the temperature sensor based on the unique order. The electric heating tile of claim 1, wherein the second layer includes:

a first terminal provided at one end of the electric heating wire at a position corresponding to the position of a positive terminal provided on the first layer; and

a second terminal provided at the other end of the electric heating wire at a position corresponding to the position of a negative terminal provided on the first layer,

and wherein the first terminal and the second terminal are respectively connected to the positive terminal and the negative terminal by soldering, and conductive paste is applied to the soldered area.

FIG. 1

**100**

FIG. 2

FIG. 3

FIG. 4

FIG. 5

FIG. 6

FIG. 7

POWER SUPPLY UNIT
(151)

COMMUNICATION UNIT
(152)

HEATING WIRE CONTROL UNIT
(153)

150

FIG. 8

# EUROPEAN SEARCH REPORT

**Application Number**

EP 24 22 3573

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/109681 A1 (YUE MON-HWA [TW]) 10 June 2004 (2004-06-10) | 1 | INV. H05B3/06 |
| Y | * abstract; figures 1-3, 6 * * paragraphs [0008] - [0010], [0026] - [0033], [0039] - [0042] * | 2 | H05B3/26 H05B3/28 |
| X | EP 2 921 084 A1 (MARUDEOHAM INC [KR]) 23 September 2015 (2015-09-23) | 1 | |
| Y | * abstract; figures 1-3, 8-11 * * paragraphs [0051] - [0059], [0065] - [0088] * | 2 | |
| A | CN 206 724 290 U (GUO YABIN) 8 December 2017 (2017-12-08) * figures 1-5 * * Sections "Utility model content", "Detailed description" * | 1,2 | |

**TECHNICAL FIELDS SEARCHED (IPC)**

H05B

The present search report has been drawn up for all claims

| Place of search | Date of completion of the search | Examiner |
|---|---|---|
| Munich | 30 June 2025 | Varelas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3573

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | | Publication date | Patent family member(s) | | Publication date |
|---|---|---|---|---|---|
| US 2004109681 | A1 | 10-06-2004 | CN | 1504693 A | 16-06-2004 |
| | | | EP | 1427255 A2 | 09-06-2004 |
| | | | US | 2004109681 A1 | 10-06-2004 |
| EP 2921084 | A1 | 23-09-2015 | EP | 2921084 A1 | 23-09-2015 |
| | | | US | 2016014847 A1 | 14-01-2016 |
| | | | WO | 2015088115 A1 | 18-06-2015 |
| CN 206724290 | U | 08-12-2017 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040109681 A